(19) Europäisches Patentamt

European Patent Office

Office européen des brevets

(11) **EP 0 630 855 B1**

(12) **EUROPEAN PATENT SPECIFICATION**

(45) Date of publication and mention
of the grant of the patent:
**22.03.2000 Bulletin 2000/12**

(51) Int. Cl.[7]: **C01B 33/36**, B01J 39/14,
C11D 3/12

(21) Application number: **94109831.1**

(22) Date of filing: **24.06.1994**

(54) **Synthesized inorganic ion exchange material and detergent composition containing the same**

Synthetisiertes, anorganisches Ionenaustauschermaterial sowie dieses enthaltende
Waschmittelzusammensetzung

Matériau d'échange d'ions minéral synthétique et compositions détergenter le contenant

(84) Designated Contracting States:
**DE ES GB**

(30) Priority: **26.06.1993 JP 17983993**
**03.03.1994 JP 6014294**

(43) Date of publication of application:
**28.12.1994 Bulletin 1994/52**

(73) Proprietor: **KAO CORPORATION**
**Chuo-ku, Tokyo (JP)**

(72) Inventors:
• **Sakaguchi, Mikio**
**Wakayama-shi, Wakayama-ken (JP)**
• **Sakamoto, Ichiro**
**Wakayama-shi, Wakayama-ken (JP)**

• **Akagi, Ryuichi**
**Wakayama-shi, Wakayama-ken (JP)**

(74) Representative:
**VOSSIUS & PARTNER**
**Siebertstrasse 4**
**81675 München (DE)**

(56) References cited:
**EP-A- 0 550 048**          **FR-A- 2 434 117**

• **DATABASE WPI Week 8104, Derwent
Publications Ltd., London, GB; AN 81-04828D &
JP-B-61 059 245 (TOKUYAMA SODA KK) 15
December 1986**

## Description

The present invention relates to a synthesized inorganic ion exchange material and a detergent composition containing the same, and more specifically to a synthesized inorganic ion exchange material excellent in ion exchange capacity and alkaline capacity, and having anti-solubility in water, and a detergent composition containing such a synthesized inorganic ion exchange material.

To date, a large number of chelating agents, ion exchange materials, precipitants, dispersants and other substances have been reported to be used for detergent builders. In recent years, the use of tripolyphosphates has decreased, since they can cause eutrophication in closed freshwater areas such as lakes and marshes. Instead, crystalline aluminosilicates, typically those disclosed in Japanese Patent Laid-Open Nos. 50-12381 and 51-12805, have been commonly used.

Although sodium silicate has an ion exchange capacity not less than that of zeolite, its use has been limited since it is soluble in water. As a means for solving this problem, a method in which sodium silicate is thermally dehydrated, baked and powdered is disclosed in Japanese Patent Laid-Open No. 60-239320, and a method in which part of the silicon of sodium silicate is isomorphously replaced with aluminum in a similar manner is disclosed in Japanese Patent Laid-Open No. 3-93649. However, both methods have problems in that the obtained anti-solubility is insufficient and the ion exchange capacity is low. Also, crystalline calcium silicate alkali hydrates obtained by hydrothermal synthesis are disclosed in Japanese Patent Examined Publication No. 61-59245, but they are substantially unsuitable as detergent builders because of their low ion exchange capacity, though they have sufficient anti-solubility in water. Moreover, because their grain shape is in the form of coarse long fiber or mica, their aqueous dispersibility is low so that the actual ion exchange capacity shows further reduction. Also, DD-279234A1 publication discloses a crystalline magnesium-containing silicate obtained by hydrothermal synthesis, but there is a problem in that this silicate is extremely low in ion exchange capacity, making it impossible to be practically used as a detergent builder.

As described above, it has been difficult to obtain an inorganic ion exchange material which is excellent in both anti-solubility in water and ion exchange capacity, and the development of such an inorganic ion exchange material having improvements in these properties has been in demand.

EP-A 550 048 discloses a synthesized crystalline ion exchange material having a chain structure and a composition represented by the following formula in anhydride form:

$$xM_2O \cdot ySiO_2 \cdot zM'O,$$

wherein M represents Na and/or K; M' represents Ca and/or Mg; y/x is 0.5 to 2.0; and z/x is 0.005 to 1.0; the chain structure appearing as a main scattering peak in the Raman spectra at least at $970 \pm 20$ cm$^{-1}$ in the range of 900 to 1200 cm$^{-1}$.

It is an object of the present invention to provide a synthesized inorganic crystalline ion exchange material and a hydrate thereof which are excellent in ion exchange capacity and alkaline capacity and has anti-solubility in water.

Another object of the present invention is to provide a detergent composition containing the above-mentioned synthesized inorganic crystalline ion exchange material.

The present invention is concerned with the following:

(1) A synthesized inorganic crystalline ion exchange material comprising a composition represented by the following general formula (I) in anhydride form: $xM_2O \cdot ySiO_2 \cdot zM'O$, wherein M represents Na and K; M' represents Ca, or Ca and Mg; y/x is 1.4 to 2.1; z/x is 0.001 to 0.35; K/Na in $M_2O$ is 0.09 to 1.11; Mg/Ca in M'0 is 0 to 100; and $K_2O/SiO_2$ is 0.06 to 0.25, and having a structure exhibiting an X-ray diffraction pattern shown in any one of Tables 1 to 4.

(2) The synthesized inorganic crystalline ion exchange material according to (1), wherein the synthesized inorganic crystalline ion exchange material exhibits main shift peaks at least at $1080 \pm 6$ cm$^{-1}$ in Raman scattering spectra in the range of from 900 to 1200 cm$^{-1}$.

(3) The synthesized inorganic crystalline ion exchange material according to any one of (1) and (2) above wherein the cationic exchange capacity of the synthesized inorganic crystalline ion exchange material is 240 to 600 CaCO$_3$ mg/g.

(4) The synthesized inorganic crystalline ion exchange material according to (1) and 2, above wherein the cationic exchange speed of the synthesized inorganic crystalline ion exchange material is 100 to 250 CaCO$_3$ mg/g $\cdot$ minute.

(5) A hydrate of the synthesized inorganic crystalline ion exchange material according to any one of (1) to (4) above.

(6) A detergent composition containing the synthesized inorganic crystalline ion exchange material according to any one of (1) to (5) above.

(7) Composition according to (6) above containing a surfactant.

Figure 1 is an X-ray diffraction pattern obtained by X-ray diffraction analysis of the inorganic ion exchange material obtained in Example 7 (Comparison);
Figure 2 is an X-ray diffraction pattern obtained by X-ray diffraction analysis of the inorganic ion exchange material obtained in Comparative Example 1;
Figure 3 is a Raman spectrum obtained by Raman spectrometry measurement of the inorganic ion exchange material obtained in Example 5 (Comparison);
Figure 4 is a Raman spectrum obtained by Raman spectrometry measurement of the inorganic ion exchange material obtained in Example 6;
Figure 5 is a Raman spectrum obtained by Raman spectrometry measurement of the inorganic ion exchange material obtained in Comparative Example 1;
Figure 6 is an X-ray diffraction pattern obtained by X-ray diffraction analysis of the inorganic ion exchange material obtained in Example 25;
Figure 7 is an X-ray diffraction pattern obtained by X-ray diffraction analysis of the inorganic ion exchange material obtained in Example 34;
Figure 8 is an X-ray diffraction pattern obtained by X-ray diffraction analysis of the inorganic ion exchange material obtained in Example 27;
Figure 9 is an X-ray diffraction pattern obtained by X-ray diffraction analysis of the inorganic ion exchange material obtained in Example 29;
Figure 10 is a Raman spectrum obtained by Raman spectrometry measurement of the inorganic ion exchange material obtained in Example 29; and
Figure 11 is a Raman spectrum obtained by Raman spectrometry measurement of the inorganic ion exchange material obtained in Example 27.

The synthesized inorganic ion exchange material of the present invention will now be described in more detail.
The synthesized inorganic ion exchange material comprises a composition of formula (I) in an anhydride form; wherein M represents Na and K, and M' represents Ca, or Ca and Mg. $y/x$ is 1.4 to 2.1, preferably 1.5 to 1.9, more preferably 1.6 to 1.85. When $y/x$ is less than 1.4, the resulting inorganic ion exchange material has insufficient anti-solubility in water, and when it exceeds 2.1, the resulting inorganic ion exchange material has low ion exchange capacity, thereby making it insufficient to be used as an ion exchange material. $z/x$ is 0.001 to 0.35, preferably 0.002 to 0.20, more preferably 0.005 to 0.10. When in this embodiment $z/x$ is less than 0.001, the resulting inorganic ion exchange material has insufficient anti-solubility in water, and when it exceeds 0.35, the resulting inorganic ion exchange material has low ion exchange capacity, thereby making it insufficient to be used as an ion exchange material. With respect to $x, y$ and $z$ there are no limitations, provided that $y/x$ and $z/x$ have the above relationships. When $xM_2O$, for example, is $x'Na_2O \cdot x''K_2O$, $x$ equals to $x'+x''$. Likewise, when $zM'O$ for example, is $z'CaO \cdot z''MgO$, $z$ equals to $z' + z''$.
With respect to increased cationic exchange speed, $K/Na$ is 0.09 to 1.11, preferably 0.12 to 0.72, and more preferably 0.16 to 0.60, and with respect to increased cationic exchange capacity, $Mg/Ca$ is 0 to 100, preferably 0.005 to 20, and more preferably 0.01 to 10.
Further, the synthesized inorganic ion exchange material of the present invention having the general formula (I) exhibits a $K_2O/SiO_2$ ratio of not less than 0.06 and not greater than 0.25.
In the case where $K_2O/SiO_2$ is not less than 0.06 and not greater than 0.25, the resulting inorganic ion exchange material has a remarkably improved cationic exchange speed, making it highly suitable to be used as an inorganic ion exchange material. With respect to the range of $K_2O/SiO_2$, it is preferably 0.071 to 0.238, more preferably 0.071 to 0.215, still more preferably 0.08 to 0.20, and most preferably 0.10 to 0.18. When $K_2O/SiO_2$ exceeds 0.25 or when it is less than 0.06, the resulting inorganic ion exchange material has a tendency to have a small cationic exchange speed relative to its cationic exchange capacity.
One of the features of the present invention is that $K/Na$ is 0.09 to 1.11, showing a remarkably restricted amount of K used in the composition. Another feature is that K and $SiO_2$ have such a relationship that $K_2O/SiO_2$ is in the range of from 0.06 to 0.25.
The sythesized inorganic ion exchange material of the present invention has a crystalline structure with an X-ray diffraction pattern shown in any one of Tables 1 to 4.

TABLE 1

| d | Relative intensity |
|---|---|
| 6.03 | M |
| 3.98 | VS |
| 3.78 | M |
| 3.31 | WM |
| 3.04 | M |
| 3.01 | M |
| 2.89 | WM |
| 2.83 | M |
| 2.57 | WM |
| 2.42 | S |
| Relative intensity VS = 100-75, S = 75-50, M = 50-25, WM=25-10 | |

TABLE 2

| d | Relative intensity |
|---|---|
| 5.99 | M |
| 4.22 | WM |
| 4.08 | M |
| 3.97 | S |
| 3.77 | S |
| 3.45 | M |
| 3.04 | M |
| 3.00 | M |
| 2.89 | M |
| 2.83 | S |
| 2.42 | VS |
| Relative intensity VS = 100-75, S = 75-50, M = 50-25, WM = 25-10 | |

TABLE 3

| d | Relative intensity |
|---|---|
| 5.98 | M |
| 5.26 | WM |
| 4.31 | M |
| 4.23 | M |
| 4.08 | VS |
| 3.98 | WM |
| 3.77 | S |
| 3.55 | WM |
| 3.51 | M |
| 3.46 | M |
| 3.12 | WM |
| 3.04 | S |
| 2.99 | S |
| 2.89 | M |
| 2.83 | VS |
| 2.80 | M |
| 2.60 | WM |
| 2.57 | M |
| 2.51 | M |
| 2.42 | VS |
| Relative intensity<br>VS = 100-75, S = 75-50,<br>M = 50-25, WM = 25-10 | |

TABLE 4

| d | Relative intensity |
|---|---|
| 5.99 | M |
| 4.23 | M |
| 4.08 | VS |
| 3.98 | M |
| 3.77 | S |
| 3.51 | WM |
| 3.46 | M |
| 3.13 | M |
| 2.99 | M |
| 2.89 | S |

TABLE 4 (continued)

| d | Relative intensity |
|---|---|
| 2.83 | VS |
| 2.61 | WM |
| 2.52 | M |
| 2.42 | VS |
| Relative intensity VS = 100-75, S = 75-50, M = 50-25, WM = 25-10 | |

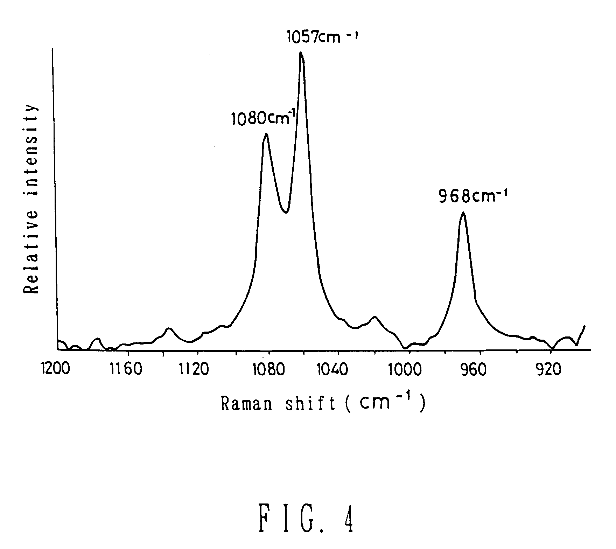

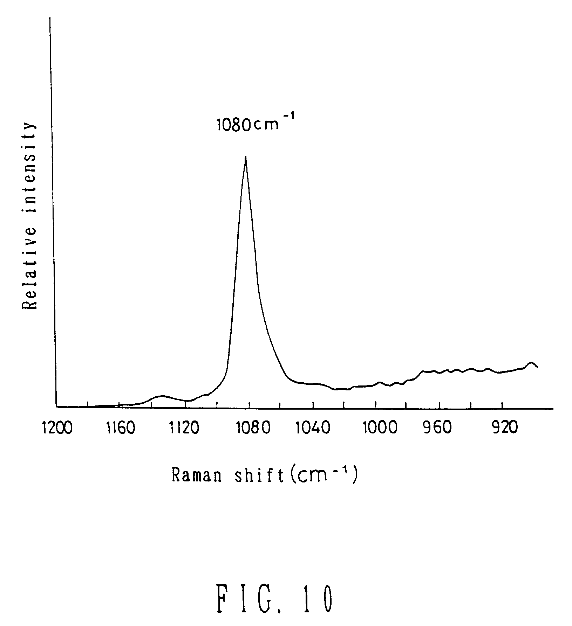

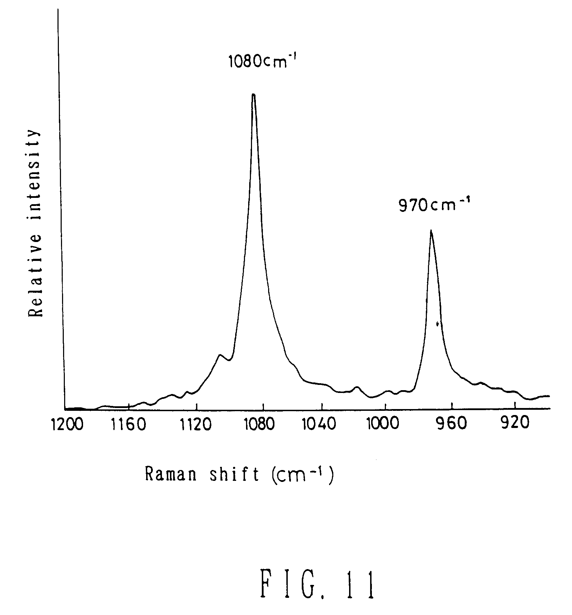

A preferred embodiment of the present invention is characterized in that the synthesized inorganic ion exchange material exhibits main shift peaks at least at $1080 \pm 6$ cm$^{-1}$ in Raman scattering spectra in the range of from 900 to 1200 cm$^{-1}$. For instance, there may be cases where Raman shift peaks are found at both $968 \pm 6$ cm$^{-1}$ and $1080 \pm 6$ cm$^{-1}$ (see, for instance, Figure 4 and Figure 11), or cases where Raman shift peak is found at $1080 \pm 6$ cm$^{-1}$ alone (see, for instance, Figure 10).

The structural features of the synthetic inorganic ion exchange material of the present invention are as follows: One feature is that the inorganic ion exchange material has an Si-O network formed by a $Q_2$ unit. By having such a feature, the degree of freedom in its structure increases, so that alkaline cations in the crystal lattice are more likely to be released in water, thereby increasing the cationic exchange speed of the ion exchange material. Another feature is that K atoms having an ionic radius larger than Na atoms are introduced into the crystal lattice. By having this feature, the crystal structure has a larger lattice size, thereby resulting in increase in ion exchange speed of the ion exchange material.

The Inorganic ion exchange materials of the present invention described above are obtained by chemical synthesis, which comprises three components, $M_2O$, $SiO_2$ and M'O as indicated by the general formula (I) above. Materials which can be converted as each of these components, therefore, are indispensable as starting materials for producing the inorganic ion exchange material of the present invention. In the present invention, known compounds can be appropriately used as starting materials without limitations. Examples of the $M_2O$ component and the M'O component include simple or complex oxides, hydroxides and salts of respective elements; and minerals containing respective elements. Specifically, examples of the starting materials for the $M_2O$ component include NaOH, KOH, $Na_2CO_3$, $K_2CO_3$ and $Na_2SO_4$. Examples of the starting materials for the M'O component include $CaCO_3$, $Ca(OH)_2$, $CaCl_2$, $Ca(NO_3)_2$, $MgCO_3$, $Mg(OH)_2$, MgO, $MgCl_2$, $Mg(NO_3)_2$, and dolomite. Examples of the starting materials for the $SiO_2$ component include silica, silica sand, cristobalite, kaolin, talc, fused silica and sodium silicate.

In the present invention, a method of producing the synthesized inorganic ion exchange material may be exemplified by mixing these starting material components to provide the desired compositions for the synthesized inorganic ion exchange material, and baking the resulting mixture at a temperature in the range of normally from 300 to 1300°C, preferably from 500 to 1000°C, more preferably from 600 to 900°C, to crystallize it. Alternative methods may also be exemplified by mixing in the same manner as above, melting the mixture at a temperature of 1100 to 1600°C to yield a glassified product, followed by baking, or melting to produce a water glass and baking it. In this case, when the heating temperature is less than 300°C, the crystallization is insufficient, thereby making the anti-solubility of the resulting inorganic ion exchange material poor, and when it exceeds 1300°C, coarse grains and non-crystalline phases are likely to be formed, thereby decreasing the ion exchange capacity of the resulting inorganic ion exchange material. The heating time is normally 0.1 to 24 hours. Such baking can normally be carried out in a heating furnace such as an electric furnace or a gas furnace. The baked product may be milled as necessary to a given granularity. This milling is achieved using a ball mill, a roller mill or another mechanical mill. The average particle size of the ion exchange material powder is preferably 0.1 to 100 μm.

The synthesized inorganic ion exchange material of the present invention having the structural characteristics as described above can be obtained by the above-mentioned processes.

The inorganic ion exchange material of the present invention may be a hydrate, wherein the amount of hydration is normally 0 to 20 moles of $H_2O$ in the above general formula.

The hydrate of the inorganic ion exchange material of the present invention can easily be prepared by any known method without limitations. For example, a hydrate of an inorganic ion exchange material can be obtained by suspending the anhydride of the above inorganic ion exchange material in ion exchanged water to form a hydrate, and dried to yield a powder.

The properties of the synthesized inorganic ion exchange material of the present invention will now be described hereinbelow.

The inorganic ion exchange material of the present invention or the hydrate thereof thus obtained has an ion exchange capacity of at least 240 to 600 CaCO$_3$ mg/g, preferably 250 to 600 CaCO$_3$ mg/g. The term "ion exchange capacity" used herein is a value obtained by the measurement method described below in the Examples; The sythesized inorganic ion exchange material of the second embodiment of the present invention has excellent cationic exchange speed of 100 to 250 CaCO$_3$ mg/g • minute, preferably 120 to 240 CaCO$_3$ mg/g • minute.

In the present invention, the term "anti-solubility" or "anti-solubility in water" refers to the stability of the inorganic ion exchange material in water. Accordingly, when the anti-solubility is insufficient, the stability in water is poor, leading to an increase in the amount of Si dissolved in water. By contrast, the term "anti-solubility in water is excellent" means that the stability in water of the inorganic ion exchange material is good, leading to a remarkable lowering in the amount of Si dissolved in water.

In the synthesized inorganic ion exchange material of the present invention, the amount of Si dissolved in water is normally not more than 250 mg/g, when calculated as SiO$_2$, which can be said to be substantially insoluble in water. Here, the term "substantially insoluble in water" means stability in water of the chemical structure concerned with the cationic exchange capacity, so that the amount of Si dissolved, when calculated as SiO$_2$, is normally less than 200 mg/g when a 2 g sample is added to 100 g of ion exchanged water and the mixture is stirred at 25°C for 30 minutes.

Furthermore, the synthesized inorganic ion exchange material of the present invention is excellent in the alkaline capacity. Here, "alkaline capacity" refers to the capacity of buffering action to acids. In the synthesized inorganic ion exchange material of the present invention, even when 15 ml of 0.25 N hydrochloric acid is added to a 1000 ml of aqueous dispersion having a concentration of 0.1% by weight ion exchange material, the solution has a pH of 9 to 12. Moreover, the inorganic ion exchange material is also excellent in alkaline buffering effect, having a superior alkaline buffering effect to those of sodium carbonate or ordinary amorphous sodium silicate.

Since the inorganic ion exchange materials of the present invention possess excellent ion capturing capacity and stability in water, the detergent compositions of the present invention containing such inorganic ion exchange materials possess excellent washing performance.

The detergent composition of the present invention contains at least the inorganic ion exchange material described above and/or a hydrate thereof. Although the detergent compositions of the present invention can be used without particular restriction, they may be used as clothes detergents, softeners, tableware detergents, house detergents used for floor cleaning and bathroom cleaning, toothpastes, body detergents and metalware detergents.

In the present invention, the amount of the above-mentioned inorganic ion exchange material and/or the hydrate thereof is normally 0.1 to 90% by weight, preferably 0.5 to 80% by weight, more preferably 1 to 75% by weight in the whole composition. When the amount is lower than 0.1% by weight, sufficient washing performance cannot be achieved. When it exceeds 90% by weight, the dispersability of the inorganic ion exchange material becomes poor.

Particularly in the case where the inorganic ion exchange material is used for clothes detergent, the amount of the synthesized inorganic ion exchange material is normally 0.1 to 70% by weight, preferably 1 to 60% by weight, more preferably 2 to 55% by weight. When the amount is less than 0.1% by weight, sufficient effects of the inorganic ion exchange material cannot be achieved in the composition. When it exceeds 70% by weight, the amounts of the other components contained in the detergent are restricted, thereby making the balance of the components poor as a detergent.

The detergent composition of the present invention usually contains one or more surfactants. The surfactant used in the present invention is not limitative to particular ones as long as they are those generally used for detergents. Specifically, they may be one or more surfactants selected from the group consisting of anionic surfactants, nonionic surfactants, cationic surfactants and ampholytic surfactants. For instance, surfactants can be chosen such that the surfactants of the same kind are chosen, as in the case where a plurality of anionic surfactants are chosen. Alternatively, surfactants of different kinds are chosen, as in the case where an anionic surfactant and a nonionic surfactant are respectively chosen. The amount of the surfactants is normally 0.1 to 90% by weight.

Further, in the present invention, various kinds of additives conventionally used for detergents may be suitably added. In these cases, the additives are not limitative to particular ones as long as they are those generally used for detergents. Examples of the additives include other inorganic ion exchange materials such as zeolite, sodium tripolyphosphate and sodium metaphosphate, amorphous aluminosilicates, amorphous silicates, sodium carbonate, amorphous silicas, clayey minerals, bleaching agents and enzymes.

The detergent composition of the present invention comprising the components mentioned above may be produced by any of the conventionally known methods, without being limitative to particular ones. Examples of methods for producing high bulk density detergents include those disclosed in Japanese Patent Laid-Open Nos.61-69897, 61-69899 and 61-69900 and EP513824A.

The inorganic ion exchange material of the present invention is excellent in both cationic exchange capacity and anti-solubility, making it useful to be used for a water softener and an alkalinity adjusting agent in detergents. Also, it can be used as an oil-absorbing carrier. Therefore, the detergent composition of the present invention containing such an inorganic ion exchange material offers excellent washing effects and is suitable for the concentration of detergent.

EXAMPLES

The present invention will be further described by means of the following working examples, comparative examples, detergent compositions, comparative detergent compositions and test examples, without intending to restrict the scope of the present invention thereto.
The measurements shown in Examples and Comparative Examples are obtained as follows:

(1) Cationic exchange capacity (CEC)

A 0.1 g sample is accurately weighed and added to 100 ml of a calcium chloride aqueous solution (500 ppm concentration, when calculated as $CaCO_3$), followed by stirring at 25°C for 60 minutes, after which the mixture is filtered using Membrane Filter (made of nitrocellulose; manufactured by Advantech) of 0.2 $\mu$m pore size. 10 ml of the filtrate is assayed for Ca content by an EDTA titration, and the calcium ion exchange capacity (cationic exchange capacity) of the sample is calculated from the titer. When a cationic exchange capacity is not less than 500 $CaCO_3$ mg/g, the amount of the calcium chloride aqueous solution is changed from 100 ml to 200 ml.

(2) Cationic exchange speed (CE Speed)

A 0.04 g sample milled to have an average particle size of $10 \pm 2$ $\mu$m (measured with a laser diffraction particle size distribution analyzer LA-50 manufactured by Horiba Seisakusho) is accurately weighed and added to 100 ml of a calcium chloride aqueous solution (100 ppm concentration, when calculated as $CaCO_3$), followed by stirring at 10°C for one minute, after which the mixture is filtered using Membrane Filter of 0.2 $\mu$m pore size. 10 ml of the filtrate is assayed for Ca content by an EDTA titration, and the calcium ion exchange capacity of the sample is calculated from the titer. The calcium ion exchange capacity (cationic exchange capacity) per one minute is defined as cationic exchange speed.

(3) X-ray diffraction peak intensity ratio and X-ray diffraction pattern

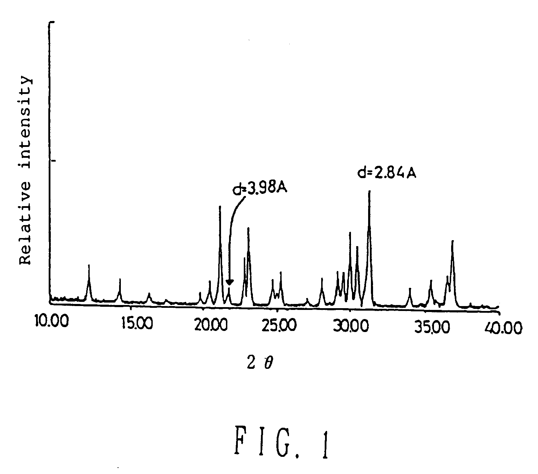

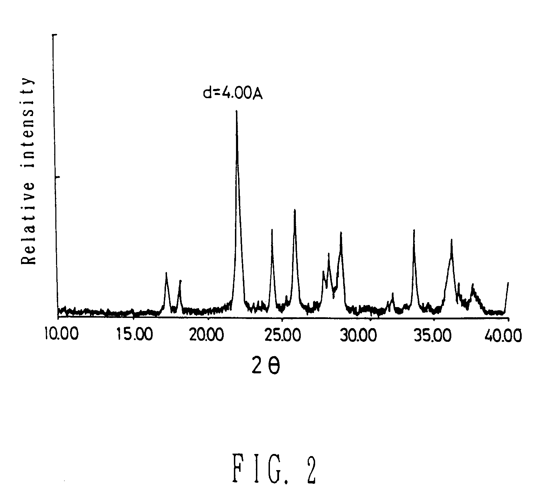

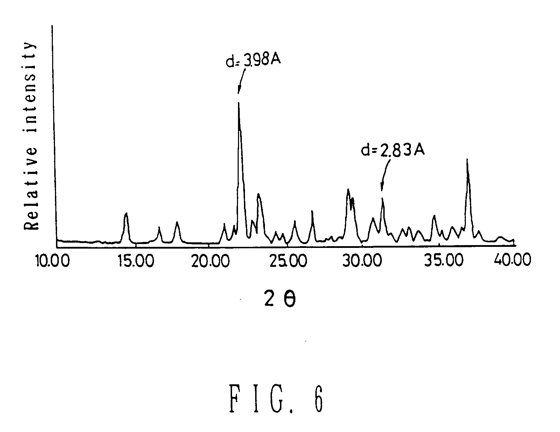

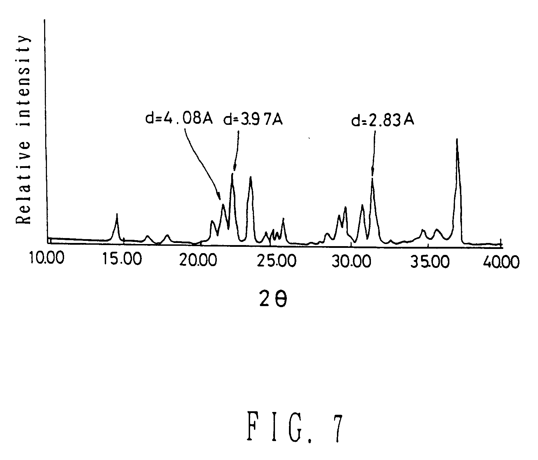

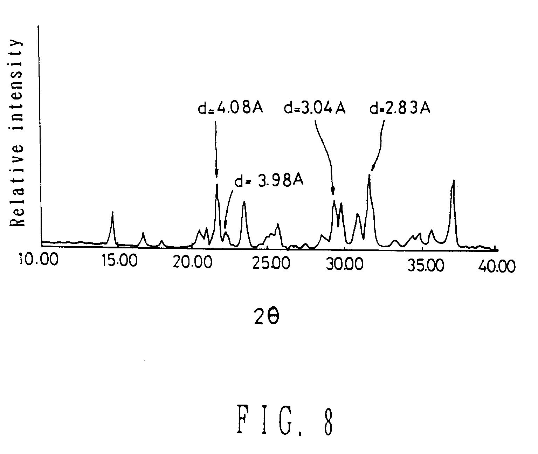

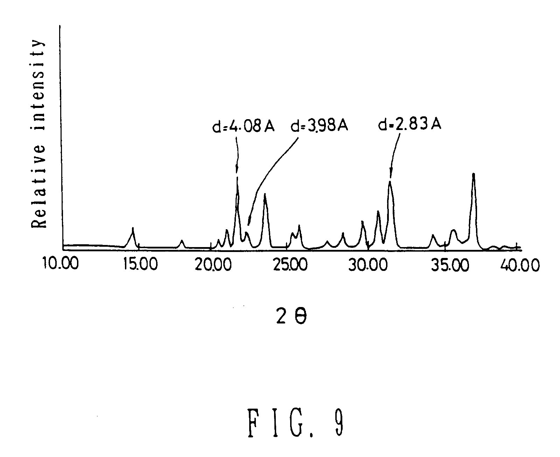

The analysis by X-ray diffraction is conducted using an X-ray diffractometer (Model RAD-200 manufactured by Rigaku Industrial Corporation; CuK$\alpha$ beam, 40 kV, 80 mA.) The intensity of the diffraction peak corresponding to d=2.84 $\pm$ 0.05Å and the diffraction peak corresponding to d=4.00 $\pm$ 0.05Å (at 2θ=31.5$\pm$1° and 2θ=22.5$\pm$1°) is measured, and the ratio of the peak intensity ($I_{d=2.84}$ / $I_{d=4.00}$) is calculated. The X-ray diffraction pattern of the inorganic ion exchange material powder 7 obtained in Example 7 (Comparison) is shown in Figure 1, that of the comparative ion exchange material powder 1 obtained in Comparative Example 1 shown in Figure 2, that of the inorganic ion exchange material powder 25 obtained in Example 25 (corresponding to Table 1) shown in Figure 6, that of the inorganic ion exchange material powder 34 obtained in Example 34 (corresponding to Table 2) shown in Figure 7, that of the inorganic ion exchange material powder 27 obtained in Example 27 (corresponding to Table 3) shown in Figure 8, and that of the inorganic ion exchange material powder 29 obtained in Example 29 (corresponding to Table 4) shown in Figure 9.

(4) Raman peak intensity ratio

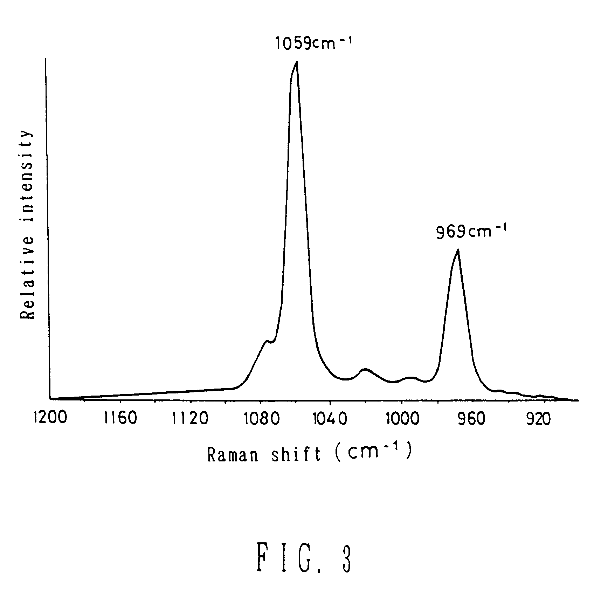

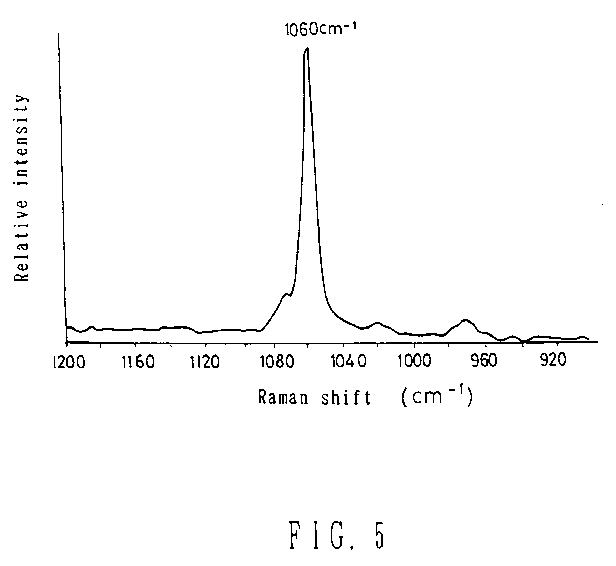

In Raman scattering spectrometry obtained by using the Fourier transform Raman spectrophotometer JSR-FT6500 model (manufactured by JEOL Ltd.; excitation light source: YAG laser; wavelength: 1064 nm; detector: InGaAs type; resolution: wavenumber=2 cm$^{-1}$, integrated frequency=500), the relative intensity ratios are calculated by determining the peak top values of the main shift peaks appearing in the range of from 900 to 1200 cm$^{-1}$. Specifically, the relative strength ratios are obtained for $I_{968}/I_{1058}$, $I_{1078}/I_{1058}$, $I_{968}/I_{1078}$, $I_{1080}/I_{1058}$ and $I_{968}/I_{1080}$. Raman spectra of the inorganic ion exchange material powders 5 and 6 obtained in Examples 5 (Comparison) and 6 are respectively shown in Figures 3 and 4, that of the comparative ion exchange material powder 1 obtained in Comparative Example 1 shown in Figure 5, that of the inorganic ion exchange material powder 29 obtained in Example 29 shown in Figure 10, and that of the inorganic exchange material powder 27 obtained in Example 27 in Figure 11.

Example 1

No. 2 sodium silicate ($SiO_2/Na_2O$ = 2.55; moisture content: 59.9%), sodium hydroxide, potassium hydroxide, anhydrous calcium carbonate and magnesium hydroxide are mixed to provide the composition shown in Table 5. The mixture is baked at a temperature of 700°C for 3 hours to obtain an inorganic ion exchange material powder 1. In the X-ray diffraction, this powder exhibits a peak corresponding to the spacing of d=2.84$\pm$0.05Å , and the intensity ratio of this peak to the peak corresponding to d=4.00$\pm$0.05Å is 0.6. The X-ray diffraction pattern corresponds to the one shown in Table 2. In Raman spectrophotometry, the powder exhibits peaks at 1058 cm$^{-1}$, 968 cm$^{-1}$ and 1078 cm$^{-1}$. The inten-

sity ratios of these peaks are, respectively, $I_{968}/I_{1058} = 0.40$, $I_{1078}/I_{1058} = 0.07$ and $I_{968}/I_{1078} = 5.71$. The powder material has a high cationic exchange capacity of 317 $CaCO_3$ mg/g and a high cationic exchange speed of 134 $CaCO_3$ mg/g · minute.

## TABLE 5

| Example | y/x | z/x | K/Na | Mg/Ca | $K_2O$ /$SiO_2$ | Main X-ray diffraction pattern | Diffraction intensity ratio $I_{d=2.8}/I_{d=4}$ | Raman main peaks ($cm^{-1}$) | | | Raman peak intensity ratio | | | CEC $CaCO_3$ mg/g | CE speed $CaCO_3$ mg/g · min |
|---|---|---|---|---|---|---|---|---|---|---|---|---|---|---|---|
| | | | | | | | | 1 st. | 2 nd. | 3 rd. | $I_{968}/I_{1058}$ | $I_{1078}/I_{1058}$ | $I_{968}/I_{1078}$ | | |
| 1 | 1.85 | 0.15 | 0.150 | 0.05 | 0.07 | Table 2 | 0.6 | 1058 | 968 | 1078 | 0.40 | 0.07 | 5.71 | 317 | 134 |
| 2 | 1.70 | 0.02 | 0.030 | 0.02 | 0.02 | * | 0.4 | 1058 | 968 | | 0.08 | — | — | 306 | 106 |
| 3 | 1.60 | 0.40 | 0.250 | 0.33 | 0.13 | * | 1.5 | 968 | 1059 | 1078 | 3.48 | 0.53 | 6.57 | 281 | 85 |
| 4 | 1.50 | 0.15 | 1.250 | 3.00 | 0.37 | * | 2.3 | 968 | 1079 | 1058 | 10.8 | 1.45 | 7.45 | 258 | 86 |
| 5 | 1.75 | 0.08 | 0.060 | 0.25 | 0.03 | * | 0.8 | 1058 | 968 | | 0.40 | — | — | 301 | 92 |
| 6 | 1.75 | 0.01 | 0.800 | 0.15 | 0.25 | Table 3 | 0.5 | 1058 | 1079 | 968 | 0.52 | 0.78 | 0.67 | 322 | 138 |
| 7 | 1.60 | 0.10 | 2.500 | 1.25 | 0.45 | * | 6.3 | 1080 | 968 | 1058 | 2.08 | 3.33 | 0.62 | 311 | 97 |
| 8 | 1.40 | 0.95 | 0.200 | 0.80 | 0.24 | * | 2.0 | 968 | 1058 | 1078 | 89.3 | 0.29 | 308 | 262 | 82 |
| 9 | 1.90 | 0.60 | 7.500 | 1.00 | 0.46 | * | 7.5 | 1079 | 1058 | | 0.06 | 4.88 | 0.01 | 281 | 96 |
| 10 | 1.55 | 0.35 | 0.500 | 8.00 | 0.22 | Table 3 | 1.6 | 968 | 1059 | 1058 | 20.7 | 1.48 | 14.0 | 323 | 164 |
| 11 | 1.65 | 0.05 | 0.300 | 2.00 | 0.14 | Table 3 | 1.7 | 968 | 1078 | 1058 | 4.57 | 1.11 | 4.12 | 348 | 146 |

*Patterns in Tables 1 to 4 are not obtained / (= Comparison)

Examples 2 and 3 (Comparison)

Inorganic ion exchange material powders 2 and 3 are obtained by baking <u>at 600°C</u> in the same manner as in Example 1 except that No. 1 sodium silicate ($SiO_2/Na_2O$ = 2.14; moisture content: 44.9%) is used in the place of No. 2 sodium silicate. The obtained powders are analyzed for X-ray diffraction, Raman spectrum and cationic exchange capacity. The results of the analyses are given in Table 5. Both of these powder materials show a high cationic exchange capacity, but not a very high CE speed.

Examples 4 and 5 (Comparison)

Inorganic ion exchange material powders 4 and 5 are obtained by baking at 600°C in the same manner as in Example 1 except that magnesium carbonate is used in the place of magnesium hydroxide. The obtained powders are analyzed for X-ray diffraction, Raman spectrum and cationic exchange capacity. The results of the analyses are given in Table 5. Both of these powder materials show a high cationic exchange capacity, but not a very high CE speed.

Examples 6 through 8 (7 and 8 for Comparison)

Inorganic ion exchange material powders 6, 7 and 8 are obtained by baking at 650°C in the same manner as in Example 1 except that powdery No. 1 sodium silicate ($SiO_2/Na_2O$ = 2.11; moisture content: 22.1%) is used in the place of No. 2 sodium silicate. The obtained powders are analyzed for X-ray diffraction, Raman spectrum and cationic exchange capacity. The results of the analyses are given in Table 5. All of the powder materials show a high cationic exchange capacity, but powders 7 and 8 not a very high CE speed.

Examples 9 through 11 (9 for Comparison)

Inorganic ion exchange material powders 9, 10 and 11 are obtained by baking at 700°C in the same manner as in Example 1 except that powdery 325 mesh-passed silica rock powder ($SiO_2$ purity 99.9%) and aqueous sodium hydroxide solution are used in the place of No. 2 sodium silicate. The obtained powders are analyzed for X-ray diffraction, Raman spectrum and cationic exchange capacity. The results of the analyses are given in Table 5. All of the powder materials show a high cationic exchange capacity, but powder 9 not a very high CE speed.

Examples 12 through 14 (12 and 14 for Comparison)

Silica rock powder, potassium hydroxide, calcium carbonate and magnesium hydroxide are mixed using a type V mixer to provide the compositions as shown in Table 6. This mixture is melted at a temperature of 1300°C for 8 hours, followed by rapid cooling to obtain cullets. After milling the cullets, cullets on a 100-mesh sieve are subjected to a hydrothermal treatment at a pressure of 3 kg/cm$^2$ for 1 hour using an autoclave to yield water glass. Each water glass obtained is baked at 650°C for 1 hour to obtain inorganic ion exchange material powders 12, 13 and 14. The obtained powders are analyzed for X-ray diffraction, Raman spectrum and cationic exchange capacity. The results are given in Table 6. All of these powder materials show a high cationic exchange capacity, but powders 12 and 14 not a very high CE speed.

# TABLE 6

| Ex-ample | y/x | z/x | K/Na | Mg/Ca | $K_2O$/$SiO_2$ | Main X-ray diffrac-tion pattern | Diffrac-tion inten-sity ratio $I_{d-2.8}$/$I_{d-4}$ | Raman main peaks ($cm^{-1}$) | | | Raman peak intensity ratio | | | CEC $CaCO_3$ mg/g | CE speed $CaCO_3$ mg/g·min |
|---|---|---|---|---|---|---|---|---|---|---|---|---|---|---|---|
| | | | | | | | | 1st. | 2nd. | 3rd. | $I_{968}$/$I_{1058}$ | $I_{1078}$/$I_{1058}$ | $I_{968}$/$I_{1078}$ | | |
| 12 | 1.80 | 0.02 | 0.040 | 0.01 | 0.02 | * | 1.0 | 968 | 1059 | 1078 | 1.36 | 0.08 | 17.0 | 310 | 97 |
| 13 | 1.45 | 0.10 | 0.200 | 0.10 | 0.12 | Table 3 | 1.4 | 968 | 1058 | 1078 | 67.4 | 0.69 | 97.7 | 568 | 164 |
| 14 | 1.50 | 0.30 | 2.000 | 9.00 | 0.44 | * | 2.8 | 968 | 1080 | 1058 | 43.7 | 1.90 | 23.0 | 498 | 99 |
| 15 | 1.75 | 0.01 | 0.010 | 0.50 | 0.01 | * | 0.5 | 1058 | 969 | — | 0.49 | — | — | 328 | 92 |
| 16 | 1.70 | 0.50 | 0.750 | 0.03 | 0.25 | * | 1.5 | 1079 | 1058 | 967 | 0.88 | 2.48 | 0.35 | 345 | 95 |
| 17 | 1.65 | 0.01 | 0.400 | 5.00 | 0.17 | Table 3 | 1.4 | 968 | 1058 | 1078 | 2.02 | 0.88 | 2.30 | 381 | 158 |
| 18 | 1.70 | 0.10 | 3.300 | 0.80 | 0.45 | * | 4.2 | 1078 | 1059 | 968 | 0.56 | 3.87 | 0.14 | 325 | 88 |
| 19 | 1.60 | 0.75 | 5.000 | 7.50 | 0.52 | * | 9.3 | 967 | 1078 | 1058 | 14.9 | 2.10 | 7.10 | 361 | 95 |
| 20 | 1.55 | 0.05 | 3.000 | 3.00 | 0.48 | * | 2.5 | 968 | 1079 | 1058 | 21.3 | 1.08 | 19.7 | 488 | 87 |

*Patterns in Tables 1 to 4 are not obtained.

EP 0 630 855 B1

Examples 15 through 17 (15 and 16 for Comparison)

Inorganic ion exchange material powders 15, 16 and 17 are obtained in the same manner as in Example 12 except that powdery silica sand ($SiO_2$ purity 99.7%) is used in the place of silica rock powder. The obtained powders are analyzed for X-ray diffraction, Raman spectrum and cationic exchange capacity. The results of the analyses are given in Table 6. All of the powder materials show a high cationic exchange capacity, but powders 15 and 16 not a very high CE speed.

Examples 18 through 20 (Comparison)

Inorganic ion exchange material powders 18, 19 and 20 are obtained in the same manner as in Example 12 except that magnesium carbonate is used in the place of magnesium hydroxide. The obtained powders are analyzed for X-ray diffraction, Raman spectrum and cationic exchange capacity. The results of the analyses are given in Table 6. All of the powder materials show a high cationic exchange capacity, but not a very high CE speed.

Comparative Example 1

No. 2 sodium silicate and sodium hydroxide are mixed to provide the compositions shown in Table 7. The mixture is baked at a temperature of 700°C to obtain a comparative ion exchange material powder 1. The powder is analyzed by X-ray diffraction and shows no peak corresponding to d=2.84±0.05Å. Raman spectrophotometry fails to confirm the peak at $1078\pm6$ cm$^{-1}$, only showing slight peaks at $968\pm6$ cm$^{-1}$. The cationic exchange capacity of the comparative powder material is 224 $CaCO_3$ mg/g, falling in the range of not more than 240 $CaCO_3$ mg/g.

**12**

# TABLE 7

| Com-para-tive Ex-ample | y/x | z/x | K/Na | Mg/Ca | $K_2O$ /$SiO_2$ | Main X-ray diffrac-tion pattern | Diffrac-tion inten-sity ratio $I_{4-2.8}$ /$I_{4-8}$ | Raman main peaks ($cm^{-1}$) | | | Raman peak intensity ratio | | | CEC $CaCO_3$ mg/g | CE speed $CaCO_3$ mg/g ·min |
|---|---|---|---|---|---|---|---|---|---|---|---|---|---|---|---|
| | | | | | | | | 1st. | 2nd. | 3rd. | $I_{968}$ /$I_{1058}$ | $I_{1078}$ /$I_{1058}$ | $I_{968}$ /$I_{1078}$ | | |
| 1 | 2.0 | — | — | — | — | *1 | — | 1060 | 968 | — | 0.07 | — | — | 224 | 69 |
| 2 | 4.0 | 1.5 | — | — | — | *1 | — | 1059 | — | — | <0.01 | — | — | 175 | 43 |
| 3 | 2.5 | 1.5 | — | — | — | *1 | — | 1059 | — | — | <0.01 | — | — | 58 | 30 |
| 4 | 1.20 | 0.10 | 0.04 | 0.50 | 0.03 | *2 | — | n.t. | n.t. | n.t. | n.t. | n.t. | n.t. | 260 | 68 |
| 5 | 1.00 | 0.04 | 0.10 | 0.10 | 0.09 | *2 | — | n.t. | n.t. | n.t. | n.t. | n.t. | n.t. | 330 | 59 |

*1 : No peak at d = 2.84 ± 0.05Å     n.t. : not tested

*2 : Patterns in Tables 1 to 4 are not obtained.

EP 0 630 855 B1

Comparative Example 2

Slaked lime is mixed in an aqueous solution of sodium silicate, and this mixture is subjected to a hydrothermal treatment in an autoclave at a pressure of 9 kg/cm$^2$ for 20 hours to yield a comparative ion exchange material powder 2 of the composition shown in Table 7. The powder is analyzed by X-ray diffraction and shows no peak corresponding to d=2.84±0.05Å . Raman spectrophotometry fails to confirm the peak at 1078±6 cm$^{-1}$. The cationic exchange capacity of the comparative powder material is found to be low.

Comparative Example 3

Magnesium hydroxide and lithium hydroxide are mixed in an aqueous solution of sodium silicate, and this mixture is subjected to a hydrothermal treatment in an autoclave at a temperature of 180°C for 20 hours to yield a comparative ion exchange material powder 3 of the composition shown in Table 7. The powder is analyzed by X-ray diffraction and shows no peak corresponding to d=2.84±0.05Å . Raman spectrophotometry fails to confirm the peak at 1078±6 cm$^{-1}$. The cationic exchange capacity of the comparative powder material is found to be low.

Example 21

No. 1 sodium silicate (SiO$_2$/Na$_2$O = 2.14 ; moisture content: 44.9%), sodium hydroxide and potassium hydroxide are dissolved to provide the composition shown in Table 8. To this solution, finely milled anhydrous calcium carbonate and anhydrous magnesium carbonate are added and mixed using a homomixer. A given amount of the mixture is transferred into a nickel crucible and baked in the air at a temperature of 600°C for 2 hours, followed by rapid cooling. The obtained baked product is milled to yield an inorganic ion exchange material powder 21. The obtained powder is analyzed for cationic exchange capacity and cationic exchange speed. As shown in Table 8, the powder material is found to have a high cationic exchange capacity and a high cationic exchange speed.

# TABLE 8

| Ex-ample | y/x | z/x | K/Na | Mg/Ca | $K_2O$ /SiO₂ | Main X-ray diffraction pattern | Diffrac-tion inten-sity ratio $I_{d-2.8}$ /$I_{d-8}$ | Raman main peaks (cm⁻¹) | | | Raman peak intensity ratio | | | CEC CaCO₃ mg/g | CE speed CaCO₃ mg/g ·min |
|---|---|---|---|---|---|---|---|---|---|---|---|---|---|---|---|
| | | | | | | | | 1st. | 2nd. | 3rd. | $I_{960}$ /$I_{1058}$ | $I_{1080}$ /$I_{1058}$ | $I_{960}$ /$I_{1080}$ | | |
| 21 | 1.80 | 0.020 | 0.168 | 0.05 | 0.08 | Table 2 | 0.6 | 1058 | 1080 | 970 | 0.31 | 0.68 | 0.46 | 306 | 134 |
| 22 | 1.80 | 0.200 | 0.305 | 50.0 | 0.13 | Table 3 | 1.0 | 1058 | 1080 | 969 | 0.34 | 0.97 | 0.35 | 284 | 125 |
| 23 | 1.80 | 0.006 | 0.479 | 0.05 | 0.18 | Table 3 | 3.1 | 1079 | 1059 | 969 | 0.39 | 1.81 | 0.22 | 322 | 168 |
| 24 | 1.80 | 0.150 | 0.656 | 0.08 | 0.22 | Table 3 | 1.8 | 1079 | 1059 | 968 | 0.48 | 2.95 | 0.16 | 285 | 135 |
| 25 | 1.70 | 0.100 | 0.114 | 0.12 | 0.06 | Table 1 | 0.3 | 1058 | 1080 | 970 | 0.30 | 0.33 | 0.91 | 276 | 118 |
| 26 | 1.70 | 0.010 | 0.256 | 0.18 | 0.12 | Table 3 | 1.9 | 1079 | 1059 | 970 | 0.78 | 1.34 | 0.58 | 333 | 152 |
| 27 | 1.70 | 0.050 | 0.342 | 0.50 | 0.15 | Table 3 | 4.2 | 1080 | 970 | | — | — | 0.56 | 330 | 144 |
| 28 | 1.70 | 0.250 | 0.515 | 0.07 | 0.20 | Table 3 | 2.6 | 1080 | 969 | | — | — | 0.34 | 271 | 111 |
| 29 | 2.00 | 0.008 | 0.429 | 0.15 | 0.15 | Table 4 | 3.6 | 1080 | | | — | — | 0 | 368 | 172 |

#### Example 22

Inorganic ion exchange material powder 22 is obtained in the same manner as in Example 21 except that No. 2 sodium silicate ($SiO_2/Na_2O$ = 2.55 ; moisture content: 59.9%) is used in the place of No. 1 sodium silicate to provide the composition shown in Table 8. The obtained powder is analyzed for cationic exchange capacity and cationic exchange speed. As shown in Table 8, the powder material has a high cationic exchange capacity and a high cationic exchange speed.

#### Example 23

Inorganic ion exchange material powder 23 is obtained in the same manner as in Example 21 except that No. 3 sodium silicate ($SiO_2/Na_2O$ = 3.18 ; moisture content: 61.7%) is used in the place of No. 1 sodium silicate to provide the composition shown in Table 8. The obtained powder is analyzed for cationic exchange capacity and cationic exchange speed. As shown in Table 8, the powder material has a high cationic exchange capacity and a high cationic exchange speed.

#### Example 24

Inorganic ion exchange material powder 24 is obtained in the same manner as in Example 23 except that calcium nitrate and magnesium nitrate are used in the place of anhydrous calcium carbonate and anhydrous magnesium carbonate to provide the composition shown in Table 8. The obtained powder is analyzed for cationic exchange capacity and cationic exchange speed. As shown in Table 8, the powder material has a high cationic exchange capacity and a high cationic exchange speed.

#### Example 25

Inorganic ion exchange material powder 25 having the composition shown in Table 8 is obtained in the same manner as in Example 21 except that the baking temperature of 650°C is employed. The obtained powder is analyzed for cationic exchange capacity and cationic exchange speed. As shown in Table 8, the powder material has a high cationic exchange capacity and a high cationic exchange speed.

#### Examples 26 and 27

Inorganic ion exchange material powders 26 and 27 having the compositions shown in Table 8 are obtained in the same manner as in Example 22 except that the baking temperature of 550°C is employed. The obtained powders are analyzed for cationic exchange capacity and cationic exchange speed. As shown in Table 8, both of the powder materials have a high cationic exchange capacity and a high cationic exchange speed.

#### Examples 28 and 29

Inorganic ion exchange material powders 28 and 29 having the compositions shown in Table 8 are obtained in the same manner as in Example 23 except that the baking temperature of 550°C is employed. The obtained powders are analyzed for cationic exchange capacity and cationic exchange speed. As shown in Table 8, both of the powder materials have a high cationic exchange capacity and a high cationic exchange speed.

#### Examples 30 and 31

Inorganic ion exchange material powders 30 and 31 having the compositions shown in Table 9 are obtained in the same manner as in Example 24 except that the baking temperature of 550°C is employed. The obtained powders are analyzed for cationic exchange capacity and cationic exchange speed. As shown in Table 9, both of the powder materials have a high cationic exchange capacity and a high cationic exchange speed.

# TABLE 9

| Ex-ample | y/x | z/x | K/Na | Mg/Ca | $K_2O$/$SiO_2$ | Main X-ray diffraction pattern | Diffraction intensity ratio $I_{4-2.8}$/$I_{4-4}$ | Raman main peaks ($cm^{-1}$) | | | Raman peak intensity ratio | | | CEC $CaCO_3$ mg/g | CE speed $CaCO_3$ mg/g·min |
|---|---|---|---|---|---|---|---|---|---|---|---|---|---|---|---|
| | | | | | | | | 1st. | 2nd. | 3rd. | $I_{960}$/$I_{1050}$ | $I_{1080}$/$I_{1050}$ | $I_{960}$/$I_{1080}$ | | |
| 30 | 1.90 | 0.040 | 0.235 | 0.10 | 0.10 | Table 2 | 0.7 | 1058 | 1080 | | 0 | 0.79 | 0 | 304 | 136 |
| 31 | 1.90 | 0.002 | 0.613 | 0 | 0.20 | Table 4 | 3.7 | 1079 | | | — | — | 0 | 358 | 188 |
| 32 | 1.75 | 0.010 | 0.724 | 1.00 | 0.24 | Table 3 | 3.2 | 1080 | 1058 | 970 | 0.55 | 4.84 | 0.11 | 290 | 122 |
| 33 | 1.75 | 0.300 | 0.325 | 2.00 | 0.14 | Table 3 | 1.3 | 1080 | 1059 | 968 | 0.50 | 1.26 | 0.40 | 262 | 106 |
| 34 | 1.60 | 0.080 | 0.190 | 0.10 | 0.10 | Table 2 | 0.9 | 1057 | 1079 | 970 | 0.70 | 0.98 | 0.71 | 275 | 119 |
| 35 | 1.60 | 0.350 | 0.404 | 95.0 | 0.18 | Table 3 | 1.5 | 1079 | 970 | 1058 | 5.11 | 4.28 | 1.19 | 255 | 123 |
| 36 | 1.60 | 0.100 | 0.582 | 10.0 | 0.23 | Table 3 | 2.0 | 1080 | 970 | 1059 | 7.33 | 8.05 | 0.91 | 260 | 192 |
| 37 | 1.50 | 0.008 | 0.176 | 0.25 | 0.10 | Table 2 | 0.8 | 969 | 1080 | 1059 | 58.4 | 1.22 | 47.9 | 286 | 125 |
| 38 | 1.50 | 0.030 | 0.342 | 5.00 | 0.17 | Table 3 | 4.0 | 969 | 1080 | | — | — | 28.1 | 274 | 116 |
| 39 | 1.40 | 0.010 | 0.266 | 0.33 | 0.15 | Table 3 | 2.4 | 968 | 1079 | | — | — | 35.4 | 275 | 123 |

EP 0 630 855 B1

Examples 32 and 33

Inorganic ion exchange material powders 32 and 33 having the compositions shown in Table 9 are obtained in the same manner as in Example 24 except that calcium chloride and magnesium chloride are used in the place of calcium nitrate and magnesium nitrate in order to add calcium and magnesium components to the compositions. The obtained powders are analyzed for cationic exchange capacity and cationic exchange speed. As shown in Table 9, both of the powder materials have a high cationic exchange capacity and a high cationic exchange speed.

Example 34

Silica sand ($SiO_2$ purity: 99.7%), sodium carbonate, potassium carbonate, anhydrous calcium carbonate and anhydrous magnesium carbonate are mixed using a ball-mill to provide the composition as shown in Table 9. This mixture is melted at a temperature of 1300°C for 20 hours, followed by rapid cooling to obtain cullets. After milling the cullets, the cullets passing through a sieve with 150 μm pore size are mixed with water, and a given amount of the mixture is transferred into a nickel crucible and baked at a temperature of 600°C for 2 hours, followed by rapid cooling. The obtained baked product is milled to yield inorganic ion exchange material powder 34. The obtained powder is analyzed for cationic exchange capacity and cationic exchange speed. As shown in Table 9, the powder material is found to have a high cationic exchange capacity and a high cationic exchange speed.

Examples 35 and 36

Inorganic ion exchange material powders 35 and 36 having the compositions shown in Table 9 are obtained in the same manner as in Example 34 except that the baking temperature of 550°C is employed. The obtained powders are analyzed for cationic exchange capacity and cationic exchange speed. As shown in Table 9, the powder materials have a high cationic exchange capacity and a high cationic exchange speed.

Examples 37 through 39

Cullets having the composition shown in Table 9 are prepared in the same manner as in Example 34. After milling, the cullets passing through a sieve with 1 mm pore size is mixed with water, and this mixture is subjected to a hydrothermal treatment in an autoclave at a pressure of 2 kg/cm$^2$ for 30 minutes. A given amount of the treated mixture is transferred into a nickel crucible and baked at a temperature of 550°C for 1 hour, followed by rapid cooling. The obtained baked product is milled to yield inorganic ion exchange material powders 37 through 39. The obtained powders are analyzed for cationic exchange capacity and cationic exchange speed. As shown in Table 9, the powder materials are found to have a high cationic exchange capacity and a high cationic exchange speed.

Comparative Examples 4 and 5

No. 2 sodium silicate, sodium hydroxide, potassium hydroxide, calcium hydroxide and magnesium hydroxide are mixed to provide the compositions shown in Table 7. Comparative ion exchange material powders 4 and 5 as shown in Table 7 are respectively obtained by baking at 700°C for 2 hours in Comparative Example 4, and by baking at 600°C for 2 hours in Comparative Example 5. These powders are analyzed for cationic exchange capacity and cationic exchange speed. The results indicate that though these powder materials have a high cationic exchange capacity, their cationic exchange speed is low.

Preparation Example of Detergent Compositions

Detergent compositions having compositions shown in Table 10 are prepared by the following methods.
Specifically, powdery starting materials comprising sodium carbonate, sodium sulfate, amorphous silica and inorganic ion exchange material are placed in a tumbling mixer granulator (Lödige mixer), and polyoxyethylene dodecyl ether and polyethylene glycol are added thereto to yield powdery detergent compositions of an average grain size of 368 to 412 μm. Here, Detergent Composition A contains the inorganic ion exchange material of the present invention, and Detergent Compositions B and C contain zeolite 4A and trisodium citrate • $2H_2O$ as the comparative ion exchange materials but do not contain the inorganic ion exchange material of the present invention.

TABLE 10

| | Detergent Composition | | |
|---|---|---|---|
| | A | B | C |
| Polyoxyethylene dodecyl ether (EOP=8) | 25 | 25 | 25 |
| Tallow soap | 1 | 1 | 1 |
| Sodium carbonate | 5 | 26 | 26 |
| Amorphous silica (TOKUSIL™) | 15 | 15 | 15 |
| Zeolite 4A | 5 | 30 | 15 |
| Trisodium citrate · 2H$_2$O | | | 15 |
| Inorganic ion exchange material powder 1 | 26 | | |
| Water | 3 | 3 | 3 |
| Total | 80 | 100 | 100 |
| pH before washing | 10.7 | 10.6 | 10.6 |
| pH after washing | 10.4 | 10.4 | 10.4 |
| Deterging Rate (%) for cloth stained with sebum | 72.3 | 72.0 | 72.4 |

Note:
To clearly distinguish the difference in composition ratios from Detergent Compositions B and C; whose total amounts are 100 parts by weight, the total amounts of Detergent Composition A is 80 parts by weight.

Detergent compositions having the compositions shown in Table 11 are prepared in the manner similar to the detergent compositions shown in Table 10 to yield powdery detergent compositions of an average grain size of 386 to 423 μm.

TABLE 11

| | Detergent Composition | | |
|---|---|---|---|
| | D (Present invention) | E (Present invention) | F (Comparative example) |
| Polyoxyethylene dodecyl ether (EOP=8) | 25 | 25 | 25 |
| Zeolite (Inorganic ion exchange material A) | - | - | 30 |
| Amorphous silica (TOKUSIL™) | 15 | 15 | 15 |
| Sodium carbonate | 3 | 3 | 23 |
| Sodium sulfate | - | - | 5 |
| Inorganic ion exchange material powder 27 | 30 | - | - |
| Inorganic ion exchange material powder 29 | - | 30 | - |
| Water | 2 | 2 | 2 |
| Total | 75 | 75 | 100 |
| Deterging Rate (%) for | | | |
| cloth stained with mud and dirt | 72.3 | 71.2 | 69.4 |
| cloth stained with sebum | 73.8 | 72.5 | 69.9 |
| Note: To clearly distinguish the difference in composition ratios from Detergent Composition F; whose total amount is 100 parts by weight, the total amounts of Detergent Composiotions D and E are 75 parts by weight. | | | |

Test Example

Detergent Compositions A through F obtained in the above-described Preparation Example of Detergent Compositions are used to carry out a deterging test by the following methods:

(1) Mud and Dirt Stained Clothes (Artificially Stained Clothes):

"Kanuma sekigyoku soil" for horticultural use is dried at 120°C ± 5°C for 4 hours and then finely pulverized. 150 mesh (100 μm)-passed soil particles are dried at 120°C ± 5°C for 2 hours. 150 g of the soil is dispersed in 1000 liters of tetrachloroethylene. A calico #2023 cloth is contacted with the dispersion and brushed. After removal of the dispersion, excessively adhered stain is removed (Japanese Patent Laid-Open No. 55-26473).

(2) Sebum/Carbon Stained Clothes (Artificially Stained Clothes):

(Model Sebum/Carbon Dirt Composition)

| | |
|---|---|
| Carbon black | 15% |
| Cotton seed oil | 60% |
| Cholesterol | 5% |

(continued)

| Oleic acid | 5% |
| Palmitic acid | 5% |
| Liquid paraffin | 10% |

1 kg of the above-described composition is dissolved and dispersed in 80 liters of tetrachloroethylene. A calico #2023 cloth is immersed therein to adhere the stains, and tetrachloroethylene is removed by drying.

(3) Deterging Conditions

To 1 liter of aqueous solution of detergents for evaluation, five 10 cm × 10 cm pieces each of mud-dirt stained cotton cloth and sebum/carbon stained cotton cloth are placed therein, and they are washed using a turgometer at 100 rpm under the following deterging conditions:

(Deterging Conditions)

| Deterging Time | 10 minutes |
| Concentration of Detergent | 0.133% |
| Hardness of Water | 4° |
| Water Temperature | 20°C |
| Rinsing | In tap water for 5 minutes |

(4) Evaluation Method of Deterging Test

Reflectivities of the original cloth before staining and those of the stained cloth before and after the washing are measured at 460 nm by means of an automatic recording colorimeter (manufactured by Shimadzu Corporation), and the deterging rate (%) is calculated by the following equation.

$$\text{Deterging Rate (\%)} = \frac{\text{Reflectivity after washing - Reflectivity before washing}}{\text{Reflectivity of the original cloth - Reflectivity before washing}} \times 100$$

The obtained results are shown in the bottom column of Tables 10 and 11. It has been confirmed that excellent washing performance can be achieved by using the detergent compositions of the present invention. Since the inorganic ion exchange material of the present invention has a high alkaline capacity as well as a high cationic exchange capacity, it can exhibit a high washing performance even if the amount of alkalinity adjusting agent such as sodium carbonate is greatly reduced. Particularly, in the case where the detergent compositions contain the inorganic ion exchange material according to the second embodiment of the present invention, since cationic exchange capacity and cationic exchange speed are high, remarkably high washing performance for mud-dirt stain and sebum stain can be achieved.

**Claims**

1. A synthesized inorganic crystalline ion exchange material comprising a composition having the following general formula (I) in an anhydride form:

$$x\text{M}_2\text{O} \cdot y\text{SiO}_2 \cdot z\text{M'O}, \tag{I}$$

wherein M represents Na and K; M' represents Ca, or Ca and Mg; y/x is 1.4 to 2.1; z/x is 0.001 to 0.35; K/Na in $\text{M}_2\text{O}$

is 0.09 to 1.11; Mg/Ca in M'O is 0 to 100; and $K_2O/SiO_2$ is 0.06 to 0.25, and having a structure exhibiting an X-ray diffraction pattern shown in any one of Tables 1 to 4.

2. The synthesized inorganic crystalline ion exchange material according to claim 1, wherein the synthesized inorganic crystalline ion exchange material exhibits main shift peaks at least at $1080 \pm 6$ cm$^{-1}$ in Raman scattering spectra in the range of from 900 to 1200 cm$^{-1}$.

3. The synthesized inorganic crystalline ion exchange material according to any one of claims 1 and 2, wherein the cationic exchange capacity of the synthesized inorganic crystalline ion exchange material is 240 to 600 $CaCO_3$ mg/g.

4. The synthesized inorganic crystalline ion exchange material according to claim 1 and 2, wherein the cationic exchange speed of the synthesized inorganic crystalline ion exchange material is 100 to 250 $CaCO_3$ mg/g • minute.

5. A hydrate of the synthesized inorganic crystalline ion exchange material according to any one of claims 1 to 4.

6. A detergent composition containing the synthesized inorganic crystalline ion exchange material according to any one of claims 1 to 5.

7. Composition according to claim 6 containing a surfactant.

**Patentansprüche**

1. Synthetisiertes, anorganisches, kristallines Ionenaustauschermaterial, umfassend eine Zusammensetzung der folgenden allgemeinen Formel (I) in Anhydridform:

$$xM_2O \bullet ySiO_2 \bullet zM'O, \qquad (I)$$

wobei M Na und K; M' Ca oder Ca und Mg; y/x 1,4 bis 2,1; z/x 0,001 bis 0,35; K/Na in $M_2O$ 0,09 bis 1,11; Mg/Ca in M'O 0 bis 100; und $K_2O/SiO_2$ 0,06 bis 0,25 ist und mit einer Struktur, die ein Röntgenbeugungsdiagramm aufweist, wie in einer der Tabellen 1 bis 4 gezeigt.

2. Synthetisiertes, anorganisches, kristallines Ionenaustauschermaterial nach Anpruch 1, wobei das synthetisierte, anorganische, kristalline Ionenaustauschermaterial Hauptverschiebungsbanden bei mindestens $1080 \pm 6$ cm$^{-1}$ im Raman-Streuungsspektrum im Bereich von 900 bis 1200 cm$^{-1}$ zeigt.

3. Synthetisiertes, anorganisches, kristallines Ionenaustauschermaterial nach einem der Ansprüche 1 und 2, wobei die kationische Austauschkapazität des synthetisierten, anorganischen, kristallinen Ionenaustauschermaterials 240 bis 600 $CaCO_3$ mg/g beträgt.

4. Synthetisiertes, anorganisches, kristallines Ionenaustauschermaterial nach Anspruch 1 und 2, wobei die kationische Austauschgeschwindgkeit des synthetisierten, anorganischen, kristallinen Ionenaustauschermaterials 100 bis 250 $CaCO_3$ mg/g • Minute beträgt.

5. Hydrat des synthetisierten, anorganischen, kristallinen Ionenaustauschermaterials nach einem der Ansprüche 1 bis 4.

6. Waschmittelzusammensetzung, enthaltend das synthetisierte, anorganische, kristalline Ionenaustauschermaterial nach einem der Ansprüche 1 bis 5.

7. Zusammensetzung nach Anspruch 6, enthaltend ein grenzflächenaktives Mittel.

**Revendications**

1. Matériau inorganique cristallin synthétique d'échange d'ions comprenant une composition ayant la formule générale (I) suivante sous une forme anhydride :

$$xM_2O \bullet ySiO_2 \bullet zM'O \qquad (I)$$

dans laquelle M représente Na et K; M' représente Ca, ou Ca et Mg; y/x est 1,4 à 2,1; z/x est 0,001 à 0,35; K/Na dans $M_2O$ est 0,09 à 1,11; Mg/Ca dans M'O est 0 à 100; et $K_2O/SiO_2$ est 0,06 à 0,25, et ayant une structure présentant une figure de diffraction aux rayons X présentée dans l'un quelconque des tableaux 1 à 4.

2. Matériau inorganique cristallin synthétique d'échange d'ions selon la revendication 1, dans lequel le matériau inorganique cristallin synthétique d'échange d'ions présente des pics de déplacement principaux au moins à $1080 \pm 6$ $cm^{-1}$ dans le spectre de diffraction Raman dans la gamme de 900 à 1200 $cm^{-1}$.

3. Matériau inorganique cristallin synthétique d'échange d'ions selon l'une quelconque des revendications 1 et 2, dans lequel la capacité d'échange cationique du matériau inorganique cristallin synthétique d'échange d'ions est comprise entre 240 et 600 mg/g de $CaCO_3$.

4. Matériau inorganique cristallin synthétique d'échange d'ions selon les revendications 1 et 2, dans lequel la vitesse d'échange cationique du matériau inorganique cristallin synthétique d'échange d'ions est comprise entre 100 et 250 mg/g • minute de $CaCO_3$.

5. Hydrate du matériau inorganique cristallin synthétique d'échange d'ions selon l'une quelconque des revendications 1 à 4.

6. Composition de détergent contenant le matériau inorganique cristallin synthétique d'échange d'ions selon l'une quelconque des revendications 1 à 5.

7. Composition selon la revendication 6 contenant un agent tensioactif.

F I G. 1

F I G. 2

F I G. 3

F I G. 4

F I G. 5

F I G. 6

FIG. 7

FIG. 8

FIG. 9

FIG. 10

FIG. 11